**Europäisches Patentamt**

(19) **European Patent Office**

**Office européen des brevets**

(11) Veröffentlichungsnummer: **0 123 273**

**A1**

(12) # EUROPÄISCHE PATENTANMELDUNG

(21) Anmeldenummer: **84104411.8**

(51) Int. Cl.³: **A 01 N 3/00**

(22) Anmeldetag: **18.04.84**

(30) Priorität: **25.04.83 DE 3314936**

(43) Veröffentlichungstag der Anmeldung:
**31.10.84 Patentblatt 84/44**

(84) Benannte Vertragsstaaten:
**AT BE CH DE FR GB IT LI LU NL SE**

(71) Anmelder: **Elstner, Erich F., Dr.**
**Wildmoosstrasse 18**
**D-8038 Gröbenzell(DE)**

(71) Anmelder: **Niehuss, Manfred, Dr.**
**Münchner Strasse 2**
**D-8011 Putzbrunn(DE)**

(72) Erfinder: **Elstner, Erich F., Dr.**
**Wildmoosstrasse 18**
**D-8038 Gröbenzell(DE)**

(72) Erfinder: **Niehuss, Manfred, Dr.**
**Münchner Strasse 2**
**D-8011 Putzbrunn(DE)**

(74) Vertreter: **Hansen, Bernd, Dr.rer.nat. et al,**
**Hoffmann, Eitle & Partner Patentanwälte Arabellastrasse**
**4**
**D-8000 München 81(DE)**

(54) **Erhöhung der Strukturresistenz von Nutz- und Zierpflanzen.**

(57) Verwendung eines Mittels aus einem wasserlöslichen Acrylpolymer, einem Vernetzungsmittel für das genannte Acrylpolymer und gegebenenfalls einer Initiator-substanz, zur Erhöhung der Strukturresistenz von Nutz- und Zierpflanzen.

EP 0 123 273 A1

- 1 -

Erhöhung der Strukturresistenz von Nutz- und Zierpflanzen

---

Die Erfindung betrifft die Verwendung eines Mittels
aus einem wasserlöslichen Acrylpolymer, einem Vernetzungsmittel für das genannte Acrylpolymere und gegebenenfalls einer Initiatorsubstanz, zur Erhöhung der
Strukturresistenz von Nutz- und Zierpflanzen.

Infolge von Pflanzenkrankheiten, die durch Schaderreger ausgelöst werden, kommt es jährlich zur Vernichtung grosser Erntebestände. Als Schaderreger fungieren dabei an erster Stelle Pilze, daneben Bakterien
und Viren, aber auch phytopatahogene tierische Parasiten.

- 2 -

Die Bekämpfung pflanzlicher Infektionskrankheiten wird auf verschiedenem Wege angegangen, nämlich durch Züchtung widerstandsfähiger Sorten, durch die Dispositonsprophylaxe, durch die Infektionsprophylaxe und durch Therapie.

Die am häufigsten angewandte Massnahme stellt die Infektionsprophylaxe dar, wonach entweder verhindert wird, dass der Erreger und der Wirt überhaupt zusammenkommen, oder, falls dies doch geschieht, der Erreger vor oder während der Keimung vernichtet wird.

Die Massnahmen, um das Zusammentreffen von Erreger und Wirt zu erschweren, sind entweder indirekter Natur, d.h. sie bestehen in einer Vorbeugung, wie z.B. optimale Wahl der Saatzeit, richtige Pflanzweite und Pflanztiefe und biologische Bodenentseuchung durch Fruchtwechsel, oder sie sind direkter Natur und bestehen in einer aktiven Bekämpfung des Schaderregers. Eine derartige Bekämpfung des Schaderregers kann z.B. durch physikalische oder chemische Desinfektion des Saat- und Pflanzgutes erfolgen; am häufigsten kommt die Anwendung eines chemischen Schutzes der heranwachsenden Pflanze infrage. Dabei ist es in der Regel erforderlich, die gesamte Pflanzenoberfläche vorsorglich mit einem entsprechenden Giftstoff, einem Fungizid, Insektizid, Bakterizid, Nematozid zu überziehen. Es ist hinreichend bekannt, dass die Anwendung derartiger Giftstoffe auf Dauer in der Natur zu grossen ökologischen Schäden führt, die sich auf die gesamte Fauna und Flora auswirken, das Grundwasser verseuchen und bei einer Anreicherung auch giftig auf den Menschen wirken können.

Es besteht somit ein dringendes Bedürfnis, die Anwendung derartiger Pflanzenschutzmittel, die durchwegs starke Giftstoffe darstellen, soweit wie möglich einzudämmen. Dafür ist es erforderlich, ausgehend vom Mechanismus des Befalls durch den Schaderreger, eine Möglichkeit aufzufinden, den Wirt gegenüber dem eindringenden Erreger möglichst widerstandsfähig zu machen.

Es ist bekannt, dass sich die Mechanismen der Pflanzeninfektion je nach der Art des Erregers, ob Pilz, Bakterium etc., bis zu einem gewissen Grad unterscheiden. Der Befall einer Wirtspflanze durch einen Schaderreger soll nachfolgend am Beispiel eines Pilzparasiten, wie z.B. dem Rostpilz näher erläutert werden. Man weiss, dass sich diese Pilzparasiten in extremer Weise auf die jeweilige Wirtspflanze adaptiert hat. Die einzelnen Entwicklungsstadien von Wirtspflanze und Parasit sind genau aufeinander abgestimmt. Wenn z.B. die Rostspore bei wassergesättigter Atmosphäre auf ein Blatt fällt, so wächst der Keimschlauch quer zu den Antiklinen der Epidermiszellen und trifft mit grosser Wahrscheinlichkeit auf eine Spaltöffnung. Dabei üben die Vorhofleisten der Spaltöffnungen einen mechanischen Reiz auf den Pilz aus. Dieser bildet ein Appressorium aus, das als eine Art Haftorgan dient, mit dem sich der Pilz auf den Spaltöffnungen festsetzt. Das Blatt stimuliert durch den vorstehend genannten mechanischen Reiz oder durch die Ausscheidung eines Stoffes die Keimung des parasitischen Pilzes, der auf seiner Oberfläche liegt und es gleich angreifen wird.

- 4 -

Das vorstehend genannte Appressorium differenziert auf seiner Unterseite einen Infektionskeil aus, der die Schliesszellen der Spaltöffnungen während der Nacht auseinander drücken kann, so dass der Pilz innerhalb von ein bis zwei Stunden in das Blattinnere einzudringen vermag.

Der Pilz differenziert daraufhin eine Hausthorienmutterzelle, gelangt über dieselbe in die Wirtszelle und bildet ein keulenförmiges "Hausthorium", über welches er auf höchst effiziente Weise Metabolite aus der Wirtszelle saugen kann, so dass dem Pilz Nährstoffe zugeführt werden und er nach wenigen Tagen neue Sporen ausbilden kann.

Der vorstehend beschriebene Zyklus ist nur möglich, wenn in keiner der genannten Phasen entscheidende "Hemmschwellen", hervorgerufen durch Resistenzgene im Wirt, eingebaut sind.

Es ist bekannt, dass die Mehrzahl der höheren Pflanzen resistent gegen über mehr als 99,99 % aller bekannten Mikroorganismen ist: sie sind keine Wirte für dieselben und verfügen über die sogenannte "Nicht-Wirt-Resistenz".

Pflanzliche Pilzerkrankungen, wie Roste, Brände, Schorfe, Blattstreifen, Blattflecken, etc., sind erkennbar an den Vermehrungsstrukturen der Schaderreger oder an nekrotischen Gebilden infolge einer versuchten oder erfolgreichen Abwehr. In diesen Fällen liegt ein sogenannter "inkompatibler" Wirt, also schlechter Wirt vor. Im letzteren Falle spricht man von einer sogenannten "Wirt-Resistenz"; der Parasit kann zwar in die Wirtspflanze eindringen, wird aber zum Teil erfolgreich bekämpft.

Obwohl bei Befall einer Wirtspflanze durch ein Bakterium, einen Virus oder ein phytopathogenes Insekt ein unterschiedlicher Mechanismus vorliegt, sind die vorstehenden Ausführungen in bezug auf die "nicht-Wirt-Resistenz" im wesentlichen auch auf den Befall durch diese Schaderreger anwendbar.

Herkömmliche Fungizide, Bakterizide, etc. richten sich nur gegen die für die jeweilige Pflanze erfolgreichen Parasiten; sie unterstützen die sogenannte "Wirt-Resistenz".

Wie die vorstehenden Ausführungen in bezug auf die mehr als 99,99 %igen Resistenz höherer Pflanzen gegen Mikroorganismen zeigen, arbeitet die Natur in der Regel auf der Basis der "Nicht-Wirt-Resistenz". Es erscheint deshalb sinnvoll, diese Art der Resistenz zu unterstützen.

Bei der Nicht-Wirt-Resistenz kommt es nicht zu einem Befall der Wirtspflanze durch den Parasiten. Dies kann mehrere Gründe haben:

Die auf einer pflanzlichen Oberfläche angelangte Pilzspore ist in ihrem ersten Entwicklungsstadium besonders exponiert (z.B. durch Lichteinfluss, Temperatur) und abhängig (Wasserangebot, Oberflächenstruktur

0123273

der Wirtspflanze, Wuchsstoffangebot, Inhibitoren, etc.), und es sind eine Reihe von Voraussetzungen notwendig, um die Wirtspflanze so rasch wie möglich zu penetrieren, sich auszubreiten und zu vermehren.

Ein Schaderreger ist somit abhängig von einer Vielzahl von Umständen und Eigenschaften seines Wirtes, um ihn besiedeln zu können, wobei Parameter, wie z.B. die Oberflächenstrukturierung, Behaarung, Pappillen, Wachsdichte und Wachszusammensetzung, Anzahl der Spaltöffnungen, sowie ihr "Siedlungsangebot", bestehend aus Nährstoffen (Zucker und Aminosäuren) und Wuchsstoffen (Vitamine, Hormone), für die erste Entwicklungsphase determinierend sind.

Um in diesem kritischen Stadium des Befalles durch den Schaderreger eine "Hemmschwelle" aufzubauen, erscheint es sinnvoll, an der Wirtspflanze eine bleibende oder länger anhaltende Veränderung der Blattoberfläche herbeizuführen und damit die Bedingungen für Schaderreger entscheidend zu verschlechtern. Neben der Erzielung einer bleibenden Veränderung der Wirtsoberfläche durch Resistenzzüchtung, die häufig unrentabel ist, ist eine Manipulation am Wirt in Betracht zu ziehen, wobei z.B. eine Umwandlung eines Wirtes in einen "Nicht-Wirt", bei voller Aufrechterhaltung der gegebenen Produktionsleistung der Höheren Pflanze, erfolgt.

Aus einer Veröffentlichung von Oded Ziv et al, "Control of Foliar Diseases with Epidermal Coating Materials" in Plant Disease, Band 67, Nr. 2, Seiten 212 ff., ist bekannt, Wachse und wachsähnliche Substanzen bei der Bekämpfung von Blattparasiten von Mais, Sorghum und Weizen einzusetzen. Das Besprühen der Pflanzen mit den wachsartigen Produkten führte bei einzelnen Pflanzenartaen zu einer Reduzierung von Anthracnose, Brand, Rost und Mehltau.

Ausserdem ist es aus US-PS 4,094,845 und 4,169,902 bekannt, ein Mittel aus einem carboxylierten, hydrophilen Acrylsäurepolymer, einem Vernetzungsmittel und einem UV-absorbierenden Agens, als sogenanntes "Antitranspiranz" zur Verhinderung der Verdunstung von Wasser in den Blättern der Wirtspflanze einzusetzen, und diese vor Schäden durch Wind und Kälte zu schützen; gemäss Spalte 5, Z. 31 ff. dieser Druckschrift sollen diesen Mitteln zum Erhalt insektizider oder fungizider Wirkung herkömmliche Insektizide bzw. Fungizide zugefügt werden.im weiteren sollen durch Anwendung dieses Mittels Tiere, insbesondere Vögel, in Gebieten von Flughäfen etc. von den Pflanzen ferngehalten werden.

Aufgabe der vorliegenden Erfindung ist es, die Anwendung eines geeigneten Mittels zum Schutz von Pflanzen gegen den Befall von Schadstoffen zur Verfügung zu stellen.

Diese Aufgabe wird gemäss der Erfindung durch die Verwendung eines Mittels aus einem wasserlöslichen Acrylpolymer, einem Vernetzungsmittel für das genannte Acrylpolymer und gegebenenfalls einer Initiatorsubstanz, zur Erhöhung der Strukturresistenz von Nutz- und Zierpflanzen gelöst.

0123273

Unter dem Begriff "Erhöhung der Strukturresistenz", wie er in der vorliegenden Beschreibung und in den Ansprüchen gebraucht wird, ist eine Unterstützung der Resistenz der Pflanze zu verstehen, wobei versucht wird, das Wirt-Parasit-System dahingehend positiv zu verändern, dass eine bestimmte Wirtspflanze einem definierten Schaderreger gegenüber zu einem "Nicht-Wirt" wird. Dabei sollen in den kritischen Entwicklungsstadien des Schaderregers, der sich auf der noch unbehandelten oder bereits behandelten Pflanze abgesetzt hat, Hemmschwellen aufgebaut werden, so dass der Parasit vom erfolgreichen Befall in die Wirtspflanze abgehalten wird.

Unter der Bezeichnung "wasserlösliches Acrylpolymer" mit funktionellen Gruppen" ist gemäss der Erfindung ein Polymer oder Copolymer zu verstehen, das durch Polymerisation einer alpha,beta-ungesättigten organischen Säure erhalten worden ist. Beispiele derartiger ungesättigter Säuren umfassen: Acrylsäure, Methacrylsäure, Itakonsäure, Maleinsäure, Crotonsäure, Ethacrylsäure, etc.. Unter diesen sind Acrylsäure und Methacrylsäure besonders bevorzugt.

Gemäss der Erfindung zu verwendende weitere Monomere zur Herstellung des wasserlöslichen Polymers umfassen folgende Verbindungen: $C_1$-$C_8$-Alkylacrylat- und Methacrylatester, die gegebenenfalls mit Comonomeren, wie Methylmethacrylat, Ethylmethacrylat, Acrylnitril, Styrol, Vinylacetat, Vinylpropionat, Vinylchlorid, Vinylidenchlorid, etc., polymerisiert sind.

Die wasserlöslichen Acrylpolymerverbindungen gemäss der Erfindung bestehen vorzugsweise aus $C_1$-$C_6$-Alkylacrylaten und -Methacrylaten, besonders bevorzugt aus $C_1$-$C_4$-Alkylacrylaten und -Methacrylaten, wie Methylacrylat, Ethylacrylat, n-Propylacrylat, Isopropylacrylat, Butylacrylate und entsprechende Methacrylate. Diese Verbindungen können in den erfindungsgemässen wasserlöslichen Acrylpolymeren einzeln oder im Gemisch enthalten sein.

Die wasserlöslichen Acrylpolymere gemäss der Erfindung verfügen über funktionelle Gruppen. Diese am Polymermolekül vorkommenden funktionellen Gruppen können freie Carboxylgruppen, Hydroxylgruppen oder C-C-Doppelbindungen darstellen. Besonders bevorzugt ist das Vorhandensein von freien Carboxylgruppen am Acrylpolymer. Aus diesem Grund ist der Einsatz von Comonomeren aus Niedrig-Alkylacrylaten und Methacrylaten und carboxylhaltigen Comonomerverbindungen besonders bevorzugt. Besonders geeignet ist gemäss der Erfindung die Verwendung eines Polymers aus einem $C_1$-$C_4$-Alkylacrylat oder Methacrylat mit 5 bis 10 Gew.-% eines Acrylsäure-Monomeren.

Eine wasserlösliche Acrylpolymerverbindung, die sich gemäss der Erfindung besonders eignet, setzt sich wie folgt zusammen: 40 bis 70 Gew.-% Methylmethacrylat, 10 bis 40 Gew.-% Ethylmethacrylat und 10 bis 20 Gew.-% Acrylsäure. Ein weiteres gemäss der Erfindung bevorzugt zu verwendendes Polymer setzt sich aus 30 bis 60 Gew.-% Butylacrylat, 30 bis 50 Gew.-% Methylacrylat und 10 bis 20 Gew.-% Acrylsäure zusammen. Ebenfalls bevorzugt ist ein Polymer mit der Zusammensetzung: 90 Gew.-% Ethylacrylat und 10 Gew.-% Acrylsäure.

Ein geeignetes im Handel erhältliches wasserlösliches Acrylpolymer, das gemäss der Erfindung verwendet werden kann, ist Carboset 514 H, eine Dispersion in wässrigem Ammoniak mit 40 Gew.-% Feststoff, oder als Lösung in Isopropanol mit 70 Gew.-% Feststoff, von der Firma Goodrich Chemical. Das Handelsprodukt Carboset 514 H ist eine Dispersion eines Acrylsäureharzes, dessen polare Gruppen Carboxylgruppen darstellen. Das Polymer hat ein Molekulargewicht von 30.000 und eine Säurezahl von 60 bis 70.

Ausserdem ist es besonders bevorzugt, das von der Firma Agro-K Corp., Minneapolis, USA, unter dem Namen PRO-TEC vertriebenes Produkt für die erfindungsgemässe Verwendung einzusetzen.

Um die Anwendung der Acrylpolymere für die erfindungsgemässe Verwendung zu erleichtern, ist es bevorzugt, dieselben in Wasser unter Einstellung eines pH-Wertes von 8 oder höher zu solubilisieren. Geeignete Mittel zur Einstellung des pHWertes sind Alkalihydroxide, Ammoniumhydroxid sowie organische Amine.

Das Molekulargewicht des erfindungsgemäss verwendeten Acrylpolymers kann in einem weiten Bereich variieren; es kann ein Molekulargewicht von 5.000 bis zu einigen Millionen aufweisen. Vorzugsweise beträgt das Molekulargewicht des genannten Polymeren 10.000 bis 100.000. Diese Angaben zum Molekulargewicht beziehen sich auf das Polymere vor der Vernetzung. Nach der Vernetzung, die in der Hauptsache auf der Pflanzenoberfläche selbst erfolgt, kann das Molekulargewicht bis zu mehrere Millionen betragen.

Als Vernetzungsmittel in der erfindungsgemäss verwendeten Zubereitung eignen sich bifunktionelle und polyfunktionelle Materialien, die mit den funktionellen Gruppen des wasserlöslichen Acrylpolymers reagieren können. Als Vernetzungsmittel kann in der erfindungsgemäss verwendeten Zubereitung jedes hierfür geeignete Mittel, das über entsprechende funktionelle Gruppen verfügt, verwendet werden.

Beispielhaft sollen im folgenden einige besonders geeignete Vernetzungsmittel angegeben werden: Formaldehydharze, Epoxyharze und mehrwertige Metallionen.

Unter den Formaldehydharzen sind Harze auf der Basis von Melamin, wie z.B. Methylolmelamine und niedrigmolekulare Melaminformaldehydharze sowie Phenolaldehydharze zu nennen.

Unter den Epoxyverbindungen eignen sich insbesondere Epoxyharze von niederem Molekulargewicht und Diglycidyl- und Triglycidylether.

Als geeignete mehrwertige Metallionen sind die Oxide und Hydroxide von Calcium, Zink und Titan zu nennen.

Unter den kommerziell erhältlichen Formaldehydharzen sind zu nennen: Cyme 300 von American Cyanamid und Resimene RF 5306 von Monsato Chemical Co.. Die Melaminformaldehydharze sind unter den Vernetzungsmitteln besonders bevorzugt.

Unter den im Handel erhältlichen Epoxyverbindungen sind zu nennen: Epon 812 von Shell Chemical Co., ein Glyzerin-Triglycidylether; Epon 828, der von Epichlorhydrin und Bisphenol A abgeleitete Diglycidylether; Eponite 100 von Shell Chemical Co., und DER 332 von Dow Chemical Co.. Besonders bevorzugt sind der Bisphenol-A-Diglycidylether und der Glycerin-triglycidylether.

Bei der Verwendung von mehrwertigen Metallverbindungen als Vernetzungsmittel, insbesondere bei Zinkverbindungen, bereitet man vorzugsweise eine Ammoniumcarbonatlösung, die zu der Lösung oder Dispersion des Polymers zugegeben wird.

Der gemäss der Erfindung gegebenenfalls verwendete Initiator stellt vorzugsweise einen fotochemischen Initiator dar, insbesondere ein im UV-Bereich absorbierendes Agens. Es ist bevorzugt, dass die im UV-Bereich absorbierende Initiatorsubstanz im Wellenlängenbereich von 2.700 bis ca. 4.000 A absorbiert. Als besonders geeignete Initiatorverbindungen sind zu nennen: Ester von para-Aminobenzoesäure, wie der Glycerylester; Ester von substituierten para-Aminobenzoesäuren und para-Methoxyzimtsäure, wie z.B. der 2-Ethoxyethylester; Cumarinether; Benzophenonderivate, wie z.B. 2-Hydroxy-4-methoxy-benzophenon; von aromatischen Aldehyden abgeleitete Hydrazone, Bisoxalsäurediamide; Benzoylbenzofuranderivate; Fromazanderivate; ebenfalls geeignet sind Metallchelate von Bicyclononandionester; 2-Acryl-4,5-arylo-1,2,3-triazole.

Als besonders bevorzugte Initiatorsubstanz ist 2-Eth-oxyethyl-p-methoxy-cinnamat zu nennen, das unter dem Handelsnamen GIV-TanF von der Firma Sindar Division of Giuvadan Corp., Clifton, N.J., erhältlich ist.

Die Zusammensetzung des erfindungsgemäss verwendeten Mittels aus wasserlöslichem Acrylpolymer, Vernetzungsmittel und Initiatorsubstanz ist vorzugsweise so zu wählen, dass das Mittel vor der Anwendung noch eine bestimmte Zeit gelagert werden kann. Besonders bevorzugt ist es, wenn das Mischungsverhältnis so eingestellt wird, dass eine nennenswerte Vernetzung und damit Erhöhung des Molekulargewichtes erst nach ca. drei bis sechs Tagen Lagerung bei Raumtemperatur eintritt. Auf diese Weise ist es möglich, das erfindungsgemäss verwendete Mittel einige Zeit vor der Anwendung zu mischen und es dann in den darauffolgenden Tagen auf die Pflanzen aufzusprühen. Es hat sich ge-zeigt, dass Melaminformaldehydharze den erfindungsge-mässen Mitteln eine ausgesprochene Lagerbeständigkeit vermitteln, sofern das Mittel vor Einwirkung ultravioletter Strahlen geschützt wird. Obwohl eine mehrtägige Lagerung des erfindungsgemäss verwendeten Mittels möglich sein soll, ist es doch besonders vorteilhaft, dasselbe unmittelbar vor der Verwendung zu mischen, da es sich aufgrund der verhältnismässig niederen Viskosität zu diesem Zeitpunkt am leichtesten applizieren lässt.

In dem erfindungsgemäss verwendeten Mittel wird ein Mischungsverhältnis der einzelnen Komponenten gewählt, wonach das wasserlösliche Acrylpolymer in einem Anteil von 80 bis 99 Gew.-%, das Vernetzungsmittel im Bereich von 1 bis 15 Gew.-%, bevorzugt 1
bis 5 Gew.-%, und der Initiator in einer Menge von
0,0001 Gew.-%, bevorzugt 0,0005 bis 0,20 Gew.-%, bezogen auf das Gesamtfeststoffgewicht des Mittels vorliegt.

Die erfindungsgemäss verwendeten Lösungen oder Dispersionen des genannten Mittels enthalten dasselbe in
Anteilen von 3 bis 30%, vorzugsweise von 3 bis 15 %,
besonders bevorzugt von 5 bis 10 %.

Im allgemeinen wird das erfindungsgemäss verwendete
Mittel in einer Menge von 50 bis 500 l/ha auf die
Pflanzen aufgebracht. Bevorzugt ist eine Applikation
des Mittels in einer Menge von 50 l/ha.

Die Applikation des erfindungsgemäss verwendeten Mittels erfolgt nach bekannten Methoden der Tauch- oder
Sprühbehandlung, bevorzugt jedoch nach dem ULV- oder
C-D-A-Verfahren. Hierzu wird auf die in der
DE-OS 1 313 673 beschriebene Vorrichtung zum Versprühen von Flüssigkeiten und Suspensionen hingewiesen,
wobei man kleine Tröpfchen von einer rotierenden
Schleuderscheibe als Sprühkegel abschleudert, indem
man während des Versprühens in einer im Inneren des
Srpühkegels liegenden Zone einen zur Ausbildung einer
den Sprühkegel verengenden Zentripetalströmung hinreichenden Unterdruck erzeugt.

Im folgenden werden die Schaderreger aufgeführt, die
mit Hilfe des erfindungsgemäss verwendeten Mittels
besonders erfolgreich bekämpft werden können:

I. <u>Pilze</u>

1. Oomycetales

1.1. Plasmopara viticola (Lederbeerenkrankheit)

Ein Befall mit dem vorstehenden Erreger führt zur Rebenperonospora. Dies ist die wichtigste Krankheit des Weinstockes, die besonders in nassen Jahren auftritt. Lange Zeit war man gegen diesen Falschen Mehltau (Rebenperonospora) machtlos. Bei Erhöhung der Strukturresistenz gemäss der Erfindung ergibt sich eine Unterbindung oder Reduzierung der Infektionsmöglichkeiten für Konidien.

1.2. Phytophthora infestans

Ein Befall mit diesem Erreger führt zur Kraut- und Knollenfäule der Kartoffel sowie zur Braunfäule der Tomate. Die Kraut- und Knollenfäule ist die gefährlichste pilzliche Krankheit der Kartoffel, die die Erträge durch die Vernichtung des Blattwerkes mindert sowie zu grossen Lagerverlusten führt. Durch die erfindungsgemässe Anwendung lässt sich eine Unterbindung oder Reduzierung der Infektionsmöglichkeiten für Konidien (Sporen) an Blattflächen von Kartoffel- und Tomatenpflanzen, aber auch an den gelagerten Kartoffeln erzielen.

1.3. Pseudoperonospora humili

Dieser Schaderreger führt zur Peronospoara bzw. dem Falschen Mehltau des Hopfens und ergibt starke Ernteausfälle. Insbesondere durch die Braunscheckigkeit der Dolden ergibt sich eine Qualitätsverminderung. Gemäss der Erfindung lässt sich insbesondere eine Reduzierung der Infektionsmöglichkeiten für Sekundärinfektionen erzielen.

1.4. Phytophthora palmivora

Dieser Pilz führt zur Braunfäule bzw. dem Kakaokrebs.

1.5. Peronosporaceae an Zierpflanzen (Falscher Mehltau)

Durch Pilzbefall bildet sich an der Unterseite der Blätter ein weissgrauer Schimmelrasen aus, die Blattoberfläche zeigt zunächst bleichgelbe Flecken, die später eine dunklere Farbe annehmen. Durch die erfindungsgemässe Anwendung wird eine Infektion durch die Konidien reduziert bzw. unterbunden.

1.6 Weitere Phytophthorae führen z.B. zu einer typischen Infektionskrankheit der Ananaspflanzen.

2. Ascomycetes

Bei diesen Pilzen wird nach Besprühen mit dem erfindungsgemässen Mittel ebenfalls eine Reduzierung oder Unterbindung der Primärinfektion bzw. Sekundärinfektion erzielt. Insbesondere sind hier zu nennen:

2.1.   Gruppe der Euascomycetes, wobei insbesondere
       aufzuführen sind:

2.2    Pilze der Ordnung Plactascales: dieser Schim-
       melpilz befällt vorzugsweise frisch geschnit-
       tenes Holz. Bei Besprühen bzw. Tauchbehandlung
       des frisch geschnittenen Holzes mit dem erfindungsgemäss verwendeten Mittel wird eine Verhinderung der Besiedlung durch den genannten
       Pilz erreicht.

2.3.1  Pilze der Ordnung Erysiphales.

       Innerhalb dieser Ordnung sind insbesondere die
       folgenden Species zu nennen:

       Erysiphe graminis, der den Getreidemehltau
       verursacht. Das Auftreten von Getreidemehltau
       beobachtet man vorzugsweise an Gerste und Wei-
       zen. Nach Besprühen mit dem erfindungsgemäss
       verwendeten Mittel konnte eine Unterbindung
       bzw. Reduzierung der Infektion durch Konidien
       festgestellt werden.

2.3.2  Uncinula necator

       Dieser Pilz verursacht den Echten Mehltau bzw.
       den Äscherich des Weinstockes. Bisher wurde
       eine Bekämpfung gegen diese Erkrankung durch
       Bestäuben mit elementarem Schwefel in Pulverform vorgenommen. Bei Anwendung des erfindungsgemäss verwendeten Mittels konnte ein guter Schutz gegen den Befall dieses Pilzes
       festgestellt werden.

Der Pilz befällt auch die Keimlinge, die Blüten und die Früchte der Mango.Bei Anwendung gemäss der Erfindung ist auch bei der Mangopflanze und -Frucht ein guter Schutz gegen den Schaderreger zu erwarten.

2.3.3 Sphaerotheca mors uvae

Dieser Pilz bildet auf Stachelbeeren erst weisse, dann schwarze, leicht abwischbare Überzüge, die die Qualität der Früchte mindern. Durch Erhöhung der Strukturresistenz gemäss der Erfindung wird der Pilzbefall unterbunden.

2.3.4 Sphaerotheca humili, der Erreger des Hopfenmehltaues. Dieser Pilz befällt auch die Papaya, so dass auch hier bei Anwendung gemäss der Erfindung mit einem guten Schutz gegen den Pilz zu rechnen ist.

2.3.5 Sphaerotheca pannosa

Befall durch diesen Pilz führt zu mehlig bestäubten Rosenblättern. Es werden auch andere Zierpflanzen von diesem Pilz befallen. Bei der erfindungsgemässen Anwendung gegen diesen Echten Mehltau wird eine Sekundärinfektion durch Sporen verhindert.

2.3.6 Podosphaera leucotricha

Der Befall durch diesen Pilz führt zum Apfelmehltau.

2.4     Ordnung Pyrenomycetales:

2.4.1   Venturia inaequalis.

Dieser Pilz ruft den Apfel- und Birnenschorf hervor. Der Schorf ist die wirtschaftlich wichtigste Krankheit bei Apfel und Birne. Durch den vorzeitigen Blattbefall werden die Bäume in ihrer Entwicklung gehemmt. Die Anlage nächstjähriger Blütenknospen ist sehr stark gemindert. Die befallenen Früchte können nicht gelagert werden. Bei Besprühen der gesamten Pflanze während der Vegetationsperiode kommt es zu einer Unterbindung der Infektion durch die Sporen.

Venturia pirina und Venturia carpophila

Hier gilt das für Venturia inaequalis Gesagte in ähnlicher Weise für den Befall von Pfirsichen und Aprikosen.

2.4.2   Fusarium culmorum

Dieser Pilz verursacht insbesondere eine Saatgutinfektion an Getreide (insbesondere auch Fusarium nivale, Micronectriella nivalis). Durch Fusarium culmorum erfolgt insbesonder eine Halm- und Ähreninfektion an Getreide.

2.4.3   Pseudopeziza tracheiphila

Dieser Pilz führt zum Befall des Reblaubes. Die Krankheit breitet sich vor allem im nassen Hochsommer aus. Die teilweise Entblätterung der Rebstöcke führt zu beträchtlichen Ertragseinbussen. Bisher wurde dieser Pilzbefall durch Kupferpräparate behandelt.

Gemäss der Erfindung wird insbesondere ein Befall der frisch ausgetriebenen Rebblätter durch die Ascosporen verhindert.

2.4.4 Mycosphaerella musicola

Die Infektionsquellen dieses Pilzes sind die Konidiussporen und Ascosporen. Der Pilzbefall führt zu einer Spot-Infektion auf Bananenblättern (Bananenfleckenkrankheit).

2.4.5 Mycosphaerella graminicola
Der Pilz führt zu einer Halm- und Ähreninfektion von Weizen.

2.4.6 Leptosphaeria nodurum (Septoria nodurum)

Das Schadbild ist eine Halm- und Ähreninfektion von Weizen und Gerste.

3. Basidiomycetes

3.1 Ordnung Phragmobasidiomycetes

3.1.1 Gruppe Uredinales (Rostpilze)

Gemäss der Erfindung wird eine Verhinderung von Getreiderosten (Puccinia-Arten), Aecidio-

- 21 -

0123273

und Teleutosporen-Infektionen erzielt. Typische Schadbilder sind Gelbrost, Weizenbraunrost, Schwarzrost, Haferkronenrost, Gerstenzwergrost, Roggenbraunrost, Maisrost (Puccinia-Arten).

Nennenswerte Vertreter der Rostkrankheiten sind u.a.:

3.1.2 Uromyces phaseoli
Befall führt zu Bohnenrost.

.

3.1.3 Uromyces pisi (Erbsenrost)

3.1.4 Hemileia vastatrix
Befall durch diesen Pilz führt zu dem sogenannten Kaffeerost, einem der wichtigsten pilzlichen Schädlinge des Kaffeestrauches. Die Bekämpfung des Kaffeerostes erfolgte bisher im wesentlichen durch Spritzen mit Fungiziden. Eine antizyklische Behandlung mit dem erfindungsgemäss verwendeten Mittel PRO-TEC führt zu einer Steigerung der Strukturresistenz der Pflanze, d.h. zu einer Verhinderung des Pilzbefalles.

3.1.5 Uromyces cariophillinus
führt zu Rostkrankheiten der Zierpflanzen

3.1.6 Puccinia purpurea
Befall von Sorghum

3.1.7 Puccinia arachidis
Befall dieses Pilzes erfolgt bei Erdnüssen.

3.1.8 Uromyces appendiculatus
Der Pilz befällt Blätter und Stamm von grünen Bohnen.

3.1.9 Puccinia helianthi
Der Pilz befällt Sonnenblumen.

3.1.10 Phakopsora pachyrhizi
Dieser Pilz befällt die Sojabohne.

3.2 Gruppe Ustilaginales
Von diesem Pilz werden Keimpflanzen befallen, insbesondere von der Spezies Tilletia caries (Tilletia tritici) sowie der Spezies Ustilago avenae.

3.3 Weitere Basidiummycetes:

3.3.1 Cerospora caffeicola
Befall dieses Pilz führt zur Braunaugenkrankheit bzw. Augenfleckenkrankheit der Kaffeepflanze.

3.3.2 Exobasidium vexans
Dieser Schaderreger führt zur sogenannten Blasenkrankheit des Tees. Bei ungeschützten Blättern können die Keimhyphen direkt durch die Epidermis in das Blatt eindringen. Befall führt zu einer beträchtlichen Qualitätsverminderung sowie zu schwer ausheilbaren Schäden an den langlebigen Teesträuchern.

4.        Deuteromycetes (Fungi imperfekti): Sammelgruppe der zu den Echten Pilzen (Eumoycotinia) gehörenden Arten.

4.1       Botrytis cinerea
          Befall führt zur Grauschimmelkrankheit an Reben, Tomaten, Zierpflanzen und Erdbeeren.

4.2       Cerospora beticola
          Schaderreger der Blattflechtenkrankheit der
          Beta-Rüben, der Erdnuss (Caerospora arrachidicola), des Sorghum (Caerospora sorghi).

4.3       Alternaria-Erkrankung an Zierpflanzen und Kar-
          toffeln, Sonnenblumen, der Passionsfrucht
          durch verschiedene Arten des Pilzes Alternaria

4.4       Septoria spp.
          Führt zur Septoria-Blattfleckenkrankheit an
          Zierpflanzen und Gemüse.

4.5       Phoma lingam
          Befall bei Raps. Gemäss der Erfindung Verhinderung der Saatgutinfektion sowie der Sporeninfektion.

4.6       Piricularia oryzae
          Der Erreger befällt die Reispflanze.

## II. Pflanzenpathogene Bakterien

Hier wird gemäss der Erfindung ebenfalls ein Schutz durch Strukturresistenz erzielt, besonders auch bei Beschädigungen an der Pflanze.

Gemäss der Erfindung wurde eine Verhinderung der Blüteninfektionen durch Erwinia amylovora bei Wirtspflanzen erzielt.

## III. Phytopathogene Insekten

Durch die erfindungsgemässe Anwendung werden phytopathogene Insekten von der Wirtspflanze ferngehalten.

<u>Parasiten</u>, die gemäss der Erfindung bevorzugt bekämpft werden:

Die erfindungsgemässe Verwendung des Mittels mit der vorstehend genannten Zusammensetzung hat sich als besonders vorteilhaft erwiesen bei der Bekämpfung von: Apfelschorf, Getreide-Mehltau, Getreide-Roste, Kraut- und Knollenfäule der Kartoffel, der durch Caerospora verursachten Infektion bei Zuckerrüben, dem durch Phoma lingam verursachten Befall bei Raps, der Pseudocaercosporella bei Getreide, dem Befall durch Phytophthora und Botrytis bei Erdbeeren, der Peronospora-Erkrankung der Weinrebe sowie dem Botrytis-Befall der Weinrebe.

<u>Bevorzugte Wirtspflanzen</u>, die gemäss der Erfindung geschützt werden:
Pflanzen, die bei der erfindungsgemässen Verwendung insbesondere vor Schaderregern geschützt werden können, sind: Obstbestand, insbesondere Äpfel und Birnen, Getreide, Kartoffeln (Kraut- und Knollen), Zuckerrüben, Erdbeeren, Weinreben und Trauben.

Weiter bevorzugte Anwendungsgebiete:
Durch die erfindungsgemässe Anwendung wird ein Oberflächenschutz von frisch geschnittenem Holz, insbesondere Nadelhölzern, gegen den Befall von holzverfärbenden Pilzen und Schimmelpilzen, (Gruppe Ascomycetes und Fungi imperfecti), vor allem Bläuepilze (Schnittholzbläue) sowie gegen Lagerfäule erzielt.

Die Behandlung erfolgt mittels Tauch- oder Sprühbehandlung, vorzugsweise nach dem ULV- oder C-D-A-Verfahren.

Mit Hilfe der erfindungsgemässen Anwendung wird das frisch geschnittene Holz direkt nach dem Schnitt über den Zeitraum der Zwischenlagerung bis zur weiteren Verarbeitung vor qualitativen und quantitativen Schädigungen durch pilzliche Schaderreger geschützt.

Schutz von Saat- und Pflanzgut vor pilzlichem und bakteriellem Befall:

Gemäss der Erfindung wird ein Oberflächenschutz von Saatgut (Samen) und Pflanzgut (Knollen, Klone, Zwiebeln, etc.) vor samenbürtigen Pilz- und Bakterien-Infektionen durch Saat- oder Pflanzgut-Behandlung (Beizung) vor der Saat oder vor dem Pflanzen erzielt.

Bei der erfindungsgemässen Anwendung wurde insbesondere auch bei Vorliegen von Beschädigungen an Pflanzen eine Verhinderung des pilzlichen und bakteriellen Befalls beobachtet, so dass angenommen werden kann, dass die erfindunsgegemässe Verwendung eine Verhinderung der Spaltöffnungsstarre bewirkt.

Mit Hilfe der erfindungsgemässen Anwendung wird ausserdem eine Erhöhung der Oberflächenspannung wässriger Spritzbrühen zur Oberflächenbehandlung von Pflanzen erzielt. Dies geschieht durch Anhaftung der Tröpfchen, insbesondere bedingt durch apolare Benzylgruppen des Agens über hydrophobe Wechselwirkungen mit den ebenfalls apolaren Wachsen (sowie Kutin- und Suberinpolymeren) der pflanzlichen Oberflächen (Kutikula).

Ausserdem bewirkt die erfindungsgemässe Anwendung eine Stabilisierung der Tröpfchen beim Versprühen wässriger Spritzbrühen. Dabei erfolgt eine Verringerung der Verdunstungsmöglichkeit der Tröpfchen während ihres Fluges von der Sprühdüse bis zur Zielfläche. Dies ist bedingt durch hydrophile/hydrophobe Wechselwirkungen (detergentienartig) der Polymerverbindung mit Wasser oder wässrigen Spritzbrühen. Dieser Effekt der Reduzierung der Verdunstungsmöglichkeit der Tröpfchen mit einem Durchmesser von 100 /um ist bei der Oberflächenbehandlung von Pflanzen von Bedeutung.

Im folgenden werden Versuche zur erfindungsgemässen Verwendung beschrieben, die die Erfindung näher erläutern, jedoch diese nicht beschränken sollen.

Zur Untersuchung der Schutzwirkung beim Einsatz des Mittels gemäss der vorstehend genannten Zusammensetzung zur Erhöhung der Strukturesistenz wurden die entsprechenden Pflanzen (jeweils 1 bis 6 Stück) in Töpfen gezogen. Für jede Untersuchung dienten Pflanzen in sechs bis zehn Töpfen. Zum Einsatz kam bei den nachstehenden Versuchen, das im Handel von der Firma Agro-K Corp., Minneapolis, erhältliche Mittel "Pro-Tec", das sich zusammensetzt aus einem carboxylierten, hydrophilen Acrylpolymer, einem Vernetzungsagens sowie einer UV-absorbierenden Substanz. Pro-Tec wurde bei den Versuchen in wässsiger Lösung bzw. Dispersion in einer Konzentration von 7,5 % Feststoffgehalt angewendet.

Die Pflanzen wurden unter Einfluss von künstlichem fluoreszierenden Licht bzw. im Freilandversuch gezüchtet. Die relative Feuchte betrug beim Züchten der Pflanzem im Gewächshaus 70 %.

Die Pflanzen wurden in einem bestimmten Vegetationsstadium mit Hilfe eines Handsprühers bis zum völligen Bedecken der Pflanzen mit der vorstehend genannten wässrigen Lösung von Pro-Tec besprüht. Ca. 2 Stunden danach erfolgte Inokulierung mit dem Schaderreger. Die Ergebnisse der mit Pro-Tec behandelten Pflanzen wurden mit Kontrollproben, die nicht mit Pro-Tec behandelt wurden, verglichen.

## Experiment 1

Hierzu wurden insgesamt 20 Bohnenpflanzen (Phaseolus vulgaris), die zu einer Höhe von ca. 30 bis 50 cm gezogen worden waren, mit Uredospori von Uromyces phaseoli infiziert. Die Hälfte der Bohnenpflanzen war unmittelbar vorher mit Pro-Tec vorbehandelt worden. Die andere Hälfte diente als Kontrolle.

Nach etwa 7 Tagen zeigten die Kontrollpflanzen starken Pilzbefall. Die mit Pro-Tec behandelten Pflanzen waren nur in geringem Masse infiziert.

Im folgenden sind die erhaltenen Ergebnisse in den Tabellen 1 und 2 in Abhängigkeit von der Sporenkonzentration wiedergegeben.

## Tabelle 1

Uredosori/cm$^2$ Blattfläche

"Sporenkonzentration" = 140 mg/400 ml $H_2O$; die Kontrollpflanzen wurden nur mit Wasser behandelt

| Nr | behandelt | unbehandelt |
|----|-----------|-------------|
| 1  | 3         | 176         |
| 2  | 1         | 150         |
| 3  | 0         | 144         |
| 4  | 1         | 124         |
| 5  | 2         | 141         |
| 6  | 5         | 138         |
| 7  | 5         | 143         |
| 8  | 3         | 134         |
| 9  | 1         | 150         |
| 10 | 4         | 181         |

$\bar{x} = 2.5$      $\bar{x} = 148$

t = 25,772   3.922 = t 18, 0.ool

Hemmung der Pilzinfektion = 98%

Tabelle 2

Uredosori/cm$^2$ Blattfläche

"Sporenkonzentration" = 70 mg/400 ml H$_2$O; die Kontrollpflanzen wurden nur mit Wasser behandelt

| | | |
|---|---|---|
| 1 | 0,36 | 132 |
| 2 | 0,62 | 121 |
| 3 | 0,33 | 150 |
| 4 | 0,66 | 110 |
| 5 | 0,40 | 112 |
| 6 | 0,18 | 127 |
| 7 | 0,02 | 88 |
| 8 | 0,13 | 107 |
| 9 | 0,21 | 85 |
| 10 | 0,66 | 103 |
| 11 | 0,31 | 115 |
| 12 | 0,08 | 132 |
| 13 | 0,09 | 91 |
| 14 | | 111 |
| 15 | | 86 |

$\bar{x} = 0,26$    $\bar{x} = 111$

Hemmung = 99,77 %

Die vorstehenden Versuche in Tabelle 1 und 2 zeigen deutlich, dass durch die Verwendung von Pro-Tec die Strukturresistenz der Bohnenpflanzen in nennenswertem Masse erhöht und das Eindringen des pathogenen Erregers verhindert wird.

Experiment 2

Es wurden weitere Untersuchungen mit Phaseolus vulgaris durchgeführt, wobei die Besprühung der Pflanzen mit Pro-Tec (7,5 % Feststoffgehalt) erst nach Befall und Inkubation durch den Schaderreger erfolgte.

20 der unbehandelten Pflanzen wurden mit "Sporensuspension" besprüht (70 mg/400 ml). Es wurde die übliche Inkubationszeit abgewartet, dann erfolgte Besprühen von 10 Pflanzen mit Pro-Tec, die restlichen Pflanzen dienten als zur Kontrolle.

Es zeigte sich, dass sämtliche der mit Sporensuspension besprühten Pflanzen Sporenlager von Uromyces phaseoli, Uredosori (Sporenlager) sowie Uredosporen ausbildeten.

Bei mit Pro-Tec behandelten Pflanzen konnten die neu freigewordenen Sporen auf den gespritzten Blättern keine neuen Infektionen erzeugen. Im Gegensatz dazu bildeten sich bei den unbehandelten Pflanzen neue Infektionsherde durch die neu freigewordenen Sporen aus. Es konnte somit durch die Behandlung nach der Primärinfektion die sekundäre Folgeinfektion abgewendet werden. Ausserdem wurde mit diesen Versuchen nachgewiesen, dass keine direkte chemische Wirkung von Pro-Tec auf Uromyces phaseoli gegeben ist, da die Uredosori-Bildung und die Uredosporen-Produktion nicht beeinträchtigt wurde.

Experiment 3

In Ergänzung der vorstehend durchgeführten Versuche wurden jeweils 10 Bohnenpflanzen mit Pro-Tec behandelt, wobei verschiedene Spritz- und Sprühgeräte zum Einsatz gelangten. Mit Hilfe dieses Versuches sollte gezeigt werden, welche Spritz- bzw. Sprühgeräte für die Verteilung von Pro-Tec auf dem Pflanzenmaterial am besten geeignet sind.

2 Stunden nach dem Besprühen erfolgte Inokulation mit dem Schaderreger Uromyces phaseoli. Durch Beobachtung der sich auf den behandelten Pflanzen sowie den Kontrollpflanzen (Besprühung mit Wasser) ausbildenden Infektionsherde wurde ermittelt, welches Verfahren am geeignetsten ist.

Es hat sich gezeigt, dass eine Behandlung mit ULV- oder C-D-A-Verfahren (Controlled-Droplet-Application) mit Tröpfchengrössen der Feinsprühung im Bereich von 40 bis 100 µm am vorteilhaftesten ist.

Besonders vorteilhaft ist es, wenn beim C-D-A-Verfahren Drehscheibenapplikatoren eingesetzt werden.

Die vorstehend genannten ULV- oder C-D-A-Verfahren sollten daher bevorzugt gewählt werden, um bei den Zielkulturen eine bessere Abdeckung des Sprühbelages zu erzielen. Für die Anwendung der für den Strukturschutz verwendbaren Substanzen sind diese Verfahren sicher, da auch bei Abdrift von Sprühflüssigkeit auf nicht für die Behandlung vorgesehenen Nachbarkulturen keine Schädigung dieser Kulturen zu erwarten ist.

Experiment 4

Im folgenden wurde eine Untersuchung des Einflusses verschiedener Verdünnungen von Pro-Tec mit Wasser auf die Erhöhung der Strukturresistenz bei Bohnenpflanzen (Phasiolus vulgaris) untersucht.

Pro-Tec (im Handel erhältlicher Präparat) wurde hierzu mit Wasser im Verhältnis 1:2,5, 1:5 und 1:10 verdünnt. Nach dem Besprühen von jeweils 10 Pflanzen erfolgte Infektion mit "Sporensuspensionen" von Uromyces phaseoli. Die Kontrollproben wurden nicht mit Pro-Tec behandelt, jedoch mit der Sporensuspension infiziert.

Die über 14 Tage hin durchgeführte Beobachtung der Pflanzen ergab, dass bei einer Verdünnung von 1:2,5 eine mehr als 90%ige Hemmung des Schaderregers erzielt wurde, bei einer Verdünnung von 1:5 eine ca. 90%ige Hemmung und bei der Verdünnung 1:10 eine nur ca. 10%ige Hemmung der Sporeninfektion erreicht wurde.

Die praktische geeignetste Verdünnungsrate zur Erhöhung einer optimalen Strukturresistenz ist bei dem im Handel erhältlichen Produkt Pro-Tec bei einem Verdünnungsverhältnis von Pro-Tec : Wasser von 1:5 bis 1:7 zu finden.

Bei Verwendung neuer Feinsprühverfahren, wie dem C-D-A-Verfahren (Controlled-Droplet-Application), ist es möglich, bei höheren Verdünnungsraten ein gleich gutes Ergebnis zu erzielen, da Sprühtropfen unter

100 µm Durchmesser erzeugt werden können, wodurch die erzeugbare Tröpfchenzahl pro Volumeneinheit des Sprühmittelserheblich erhöht wird und somit eine bessere Bedeckung der zu behandelnden Oberfläche gewährleistet wird.

Experiment 5

Durch das folgende Experiment wurde gezeigt, dass die Behandlung von Saatgut (Roggenkörner) mit Pro-Tec ebenfalls zu einer Erhöhung der Strukturresistenz führt. Wird das auf diese Weise behandelte Saatgut im folgenden einem Schaderreger ausgesetzt, so wird die Infektion weitgehend verhindert. Als Kontrolle dienten unbehandelte Roggenkörner, die ebenfalls dem Schaderreger ausgesetzt wurden und einen starken Pilzbefall zeigten.

Experiment 6

Im folgenden Experiment erfolgte eine Bekämpfung von Fäulniserregern an Knollen der Kartoffel. 200 ml der im Handel erhältlichen Pro-Tec-Präparation wurden mit Wasser auf 2.000 ml verdünnt. Diese Lösung wurde auf Kartoffelknollen aufgesprüht. Es wurde darauf geachtet, dass eine vollständige Bedeckung der Knollen erfolgte. Als Vergleich diente ein zugelassenes Produkt zur Bekämpfung von Lagerfäulen an Kartoffeln (Tecto Flowable).

Die Versuchsergebnisse sind in der nachfolgenden Tabelle 3 aufgeführt. Die Daten aus Tabelle 3 ergeben, dass bei Behandlung der Kartoffelknollen mit Pro-Tec die Gewichtsverluste der Knollen über die Lagerperiode hin vermindert wurden. Ausserdem wurden weniger Knollen durch Fäulniserreger (Trocken- und Nassfäule) geschädigt als bei dem Vergleichsprodukt.

Tabelle 3

| behandelt mit | Gewichtsverlust (%) durch Lagerung Mittelwert nach 1/2, 1 3/4 und 3 Monaten | im Verlaufe der Lagerung geschädigte Knollen |
|---|---|---|
| Pro-Tec (Me 215) | 4,0 % | 1 % |
| Tecto-Flowable (W.B. 64665) | 4,6 % | 10 % |
| Gemisch aus Tecto-Flowable und Pro-Tec | 4,3 % | 4 % |
| Kontrollprobe (unbehandelt) | 4,3 % | 3 % |

Für die Verminderung des Fäulnissbefalles muss in diesem Versuch der direkte Vergleich der mit Tecto-Flowable und Pro-Tec behandelten Proben gewählt werden, da beide Proben mit wässrigen Lösungen der jeweiligen Mittel behandelt wurden.

Tecto-Flowable ist ein zugelassenes Produkt zur Bekämpfung von Lagerfäulen an Kartoffeln. Es ist jedoch bekannt, dass bei einer Anwendung mit Wasser als Lösungsmittel, erhöhte Infektionen auftreten können. Diese Möglichkeit war, wie aus Tabelle 3 ersichtlich, beim Versuch eingetreten und ergibt sich aus einem direkten Vergleich der mit Tecto-Flowable behandelten Knollen mit den Kontrollproben. Der Einsatz von Pro-Tec dagegen hat die Infektionen an den Knollen stark eingeschränkt, obwohl auch hier das Mittel in Verbindung mit Wasser als Lösungsmittel appliziert wurde. Die Kombination von Tecto-Flowable mit Pro-Tec konnte die Wirkung nicht verbessern.

Experiment 7

Frisch geschnittene Nadelhölzer (Fichte und Kiefer) wurden durch Eintauchen in eine Pro-Tec-Lösung (Verdünnung 1:5) behandelt. Entsprechende Kontrollproben wurden nicht mit Pro-Tec behandelt. Im folgenden erfolgte Inokulation der frisch geschnittenen Hölzer mit einer "Sporensuspension" von holzverfärbenden Pilzen und Schimmelpilzen.

Bei den mit Pro-Tec vorbehandelten Hölzern zeigte sich, dass der Befall durch holzverfärbende Pilze und Schimmelpilze weitgehend unterbunden werden konnte, während die Kontrollproben in starkem Masse von den Pilzen infiziert wurden.

Experiment 8

Für das folgende Experiment wurden teilgeschädigte, latent geschädigte oder gefährdete grüne, assymilierende Pflanzenteile von Phaseolus vulgaris eingesetzt. Es wurde untersucht, ob die bei diesen Pflanzen eintretende Spaltöffnungsstarre durch Behandlung mit Pro-Tec-Suspension (Verdünnung 1:5) verhindert werden konnte.

Im Gegensatz zu den nicht behandelten Kontrollproben zeigte sich bei den mit Pro-Tex behandelten Proben, dass die sogenannte Spaltöffnungsstarre weitgehend unterbunden werden konnte, während sich bei den unbehandelten Proben des Phänomen der Spaltöffnungsstarre deutlich zeigte.

P a t e n t a n s p r ü c h e

1.   Verwendung eines Mittels aus einem wasserlöslichen Acrylpolymer, einem Vernetzungsmittel für das genannte Acrylpolymer und gegebenenfalls einer Ini-tiatorsubstanz, zu Erhöhung der Strukturresistenz von Nutz- und Zierpflanzen.

2.   Verwendung gemäss Anspruch 1, wobei das Mittel ein Polymer aus $C_1-C_6$-Alkylacrylat oder Methacrylat oder ein Copolymer aus $C_1-C_6$Alkylacrylat oder Methacrylat und einem Acrylsäuremonomeren umfasst.

3.   Verwendung gemäss Anspruch 1, wobei das Mittel als Vernetzungsagens ein Methylolmelamin, ein niedrigmolekulares Epoxyharz, ein Harz auf der Basis von Phenol-Formaldehyd oder Melamin-Formaldehyd, einen Bisphenol-A-Diglycidylether, einen Glycerin-triglycidylether, einen Diglycidyl- oder Triglycidylether, oder ein Oxid oder Hydroxid von Calcium oder Zink umfasst.

4.   Verwendung gemäss Anspruch 3, wobei das Vernetzungsagens in einem Anteil von 1 bis 5 Gew.-%, bezogen auf das Gesamtfeststoffgewicht des Mittels, vorliegt.

5.   Verwendung gemäss Anspruch 1, wobei das Mittel als Initiatorsubstanz ein UV-absorbierendes Agens umfasst.

6. Verwendung gemäss Anspruch 1, wobei das Mittel als Initiatorsubstanz einen Ester von gegebenenfalls substituierten para-Aminobenzoesäuren und para-Methoxyzimtsäure umfasst.

7. Verwendung gemäss Anspruch 5, wobei die Initiatorsubstanz in Anteilen von 0,0001 bis 0,20 Gew.-%, bezogen auf das Gesamtfeststoffgewicht des Mittels, enthalten ist.

8. Verwendung gemäss Anspruch 1, wobei das Mittel das Vernetzungsagens in Anteilen von 1 bis 5 Gew.-%, gegebenenfalls die Initiatorsubstanz in Anteilen von 0,0005 bis 0,20 Gew.-%, bezogen auf das Gesamtfeststoffgewicht des Mittels, umfasst und der Rest das Poymer oder Copolymer einer ungesättigten organischen Säure darstellt.

9. Verwendung gemäss Anspruch 1 zum Schutz vor Pilzbefall, Bakterienbefall und phytopathogenen Insekten.

10. Verwendung gemäss Anspruch 1 zum Schutz vor Perenospora-Erkrankungen, Fichten-Mehltau, Falschem Mehltau, Obstschorf, Rostkrankheiten, Kraut- und Knollenfäule, durch Caerospora oder Phoma lingam, Pseudocaercosporella, bei Getreide, Phytophthora und Botrytis verursachtem Befall.

11. Verwendung gemäss Anspruch 1 zum Schutz von Weinreben, Hopfen, Kartoffelpflanzen, Roggen, Weizen oder Gerste, Zuckerrüben, Sojabohnen, Raps, Sonnenblumen, Kaffee, Reis, Keimpflanzen, Saatgut und Pflanzgut.

12.    Verwendung gemäss einem oder mehreren der Ansprüche 1 bis 8 zur Verhinderung der Spaltöffnungsstarre und anschliessendem pilzlichen und bakteriellen Befall.

13.    Verwendung gemäss Ansprüchen 1 bis 8 zum Schutz vor Peronospora, Krautfäule, Gelbrost, Weizenbraunrost, Roggenbraunrost, Blattfleckenkrankheit, Obstschorf und Rostkrankheiten.

P a t e n t a n s p r ü c h e

1. Verfahren zur Verwendung eines Mittels aus einem wasserlöslichen Acrylpolymer, einem Vernetzungsmittel für das genannte Acrylpolymer und gegebenenfalls einer Initiatorsubstanz, zu Erhöhung der Strukturresistenz von Nutz- und Zierpflanzen.

2. Verfahren gemäss Anspruch 1, wobei das Mittel ein Polymer aus $C_1$-$C_6$-Alkylacrylat oder Methacrylat oder ein Copolymer aus $C_1$-$C_6$Alkylacrylat oder Methacrylat und einem Acrylsäuremonomeren umfasst.

3. Verfahren gemäss Anspruch 1, wobei das Mittel als Vernetzungsagens ein Methylolmelamin, ein niedrigmolekulares Epoxyharz, ein Harz auf der Basis von Phenol-Formaldehyd oder Melamin-Formaldehyd, einen Bisphenol-A-Diglycidylether, einen Glycerin-triglycidylether, einen Diglycidyl- oder Triglycidylether, oder ein Oxid oder Hydroxid von Calcium oder Zink umfasst.

4. Verfahren gemäss Anspruch 3, wobei das Vernetzungsagens in einem Anteil von 1 bis 5 Gew.-%, bezogen auf das Gesamtfeststoffgewicht des Mittels, vorliegt.

5. Verfahren gemäss Anspruch 1, wobei das Mittel als Initiatorsubstanz ein UV-absorbierendes Agens umfasst.

6. Verfahren gemäss Anspruch 1, wobei das Mittel als Initiatorsubstanz einen Ester von gegebenenfalls substituierten para-Aminobenzoesäuren und para-Methoxyzimtsäure umfasst.

7. Verfahren gemäss Anspruch 5, wobei die Initiatorsubstanz in Anteilen von 0,0001 bis 0,20 Gew.-%, bezogen auf das Gesamtfeststoffgewicht des Mittels, enthalten ist.

8. Verfahren gemäss Anspruch 1, wobei das Mittel das Vernetzungsagens in Anteilen von 1 bis 5 Gew.-%, gegebenenfalls die Initiatorsubstanz in Anteilen von 0,0005 bis 0,20 Gew.-%, bezogen auf das Gesamtfeststoffgewicht des Mittels, umfasst und der Rest das Poymer oder Copolymer einer ungesättigten organischen Säure darstellt.

9. Verfahren gemäss Anspruch 1 zum Schutz vor Pilzbefall, Bakterienbefall und phytopathogenen Insekten.

10. Verfahren gemäss Anspruch 1 zum Schutz vor Perenospora-Erkrankungen, Fichten-Mehltau, Falschem Mehltau, Obstschorf, Rostkrankheiten, Kraut- und Knollenfäule, durch Caerospora oder Phoma lingam, Pseudocaercosporella, bei Getreide, Phytophthora und Botrytis verursachtem Befall.

11. Verfahren gemäss Anspruch 1 zum Schutz von Weinreben, Hopfen, Kartoffelpflanzen, Roggen, Weizen oder Gerste, Zuckerrüben, Sojabohnen, Raps, Sonnenblumen, Kaffee, Reis, Keimpflanzen, Saatgut und Pflanzgut.

- 3 -

0123273

12. Verfahren gemäss einem oder mehreren der Ansprüche 1 bis 8 zur Verhinderung der Spaltöffnungsstarre und anschliessendem pilzlichen und bakteriellen Befall.

13. Verfahren gemäss Ansprüchen 1 bis 8 zum Schutz vor Peronospora, Krautfäule, Gelbrost, Weizenbraunrost, Roggenbraunrost, Blattfleckenkrankheit, Obstschorf und Rostkrankheiten.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | DE-A-2 641 173 (C.F. DELONG, G.L. ERION III) * Ansprüche; Seite 9, Zeile 23 - Seite 10, Zeile 28; Seite 11, Zeilen 12-27; Seite 13, Zeilen 24-31 * & US - A - 4 094 845 (Kat. D) | 1-8 | A 01 N 3/00 |
| A | DE-A-2 116 009 (BAYER) * Seite 3, Zeilen 1-10, 20-30; Seite 8, Zeilen 19-26; Beispiele 1-4; Ansprüche * | 1,2,9, 11 | |
| A | CENTRAL PATENTS INDEX, BASIC ABSTRACTS JOURNAL, Section C, AGDOC Woche B/15, 6. Juni 1979, Nr. 28579, Derwent Publications Ltd., London, GB; & JP - A - 79 028 820 (MITSUBISHI CHEM. IND. K.K.) 08-08-1977 * Insgesamt * | 1,9,11 | RECHERCHIERTE SACHGEBIETE (Int. Cl. 3) A 01 N |
| A | CENTRAL PATENTS INDEX, BASIC ABSTRACTS JOURNAL, Section C, AGDOC, Woche E/37, 10. November 1982, Nr. 77540, Derwent Publications Ltd., London, GB; & JP - A - 82 126 401 (NIPPON SHOKUBAI KAGAKU (TOKF)), 27.01.1981 * Insgesamt * | 1,2,9 | |

Der vorliegende Recherchenbericht wurde für alle Patentansprüche erstellt.

| Recherchenort DEN HAAG | Abschlußdatum der Recherche 26-07-1984 | Prüfer FLETCHER A.S. |
|---|---|---|